# EUROPÄISCHE PATENTANMELDUNG

(11) **EP 2 186 593 A1**
(43) Veröffentlichungstag der Anmeldung: **19.05.2010**
(21) Anmeldenummer: 09175750.0
(22) Anmeldetag: 12.11.2009
(51) Int. Cl.: B23K 9/16, B23K 26/14, B23K 35/38

(54) **Gasgemisch**

(30) Priorität: 17.11.2008 DE 102008057686; 17.11.2008 DE 102008057687; 17.11.2008 DE 102008057688
(71) Anmelder: Linde Aktiengesellschaft, 80331 München (DE)
(72) Erfinder: Krömmer, Werner, 84034 Landshut (DE); Heinrich, Peter, 82110 Germering (DE); Miklos, Ernst, 85551 Kirchheim (DE)
(74) Vertreter: Lippich, Wolfgang

(57) **Zusammenfassung**

Die Erfindung betrifft ein Gasgemisch, einen Druckbehälter, der das Gasgemisch enthält, die Verwendung des Gasgemisches beim thermischen Spritzen, Schneiden, Fügen, Auftragschweißen und/oder bei der Oberflächenbehandlung mittels Lichtbogen, Plasma und/oder Laser, ein Verfahren, welches das Gasgemisch einsetzt, eine Vorrichtung zum Bereitstellen des Gasgemisches und ein Verfahren zur Herstellung des Gasgemisches, wobei das Gasgemisch einen Zusatz aus einem gasförmigen Kohlenwasserstoff enthält.

## Beschreibung

### Technisches Gebiet

Die Erfindung betrifft ein Gasgemisch, einen Druckbehälter, der das Gasgemisch enthält, und die Verwendung des Gasgemisches, ein Verfahren, welches das Gasgemisch verwendet, eine Vorrichtung zum Bereitstellen des Gasgemisches an der Arbeitsstelle sowie ein Verfahren zur Herstellung des Gasgemisches.

### Stand der Technik

Herkömmlich werden beim thermischen Spritzen, Schneiden, Fügen, Auftragschweißen und/oder bei der Oberflächenbehandlung mittels Lichtbogen, Plasma und/oder Laser meist Gasgemische verwendet, die hauptsächlich Argon, Helium, Stickstoff oder Wasserstoff oder deren Mischungen umfassen.

Acetylen (Ethin) wurde bisher in Verbindung mit Sauerstoff zum Gasschmelzschweißen ("autogenen Schweißen") verwendet.

### Zusammenfassung der Erfindung

In einem ersten Aspekt betrifft die Erfindung ein Gasgemisch, umfassend ein Gemisch von Argon, Helium, Stickstoff, Kohlendioxid oder Wasserstoff oder deren Mischungen mit einem unter Normalbedingungen gasförmigen Kohlenwasserstoff.

Das erfindungsgemäße Gasgemisch kann ferner Dotiermengen von NO und/oder N₂O und/oder O₂ enthalten.

In einem zweiten Aspekt betrifft die Erfindung einen Druckbehälter, der das Gasgemisch enthält.

In einem dritten Aspekt betrifft die Erfindung die Verwendung des Gasgemisches beim thermischen Spritzen, Schneiden und/oder bei der Oberflächenbehandlung mittels Lichtbogen, Plasma und/oder Laser und/oder beim Fügen und/oder Auftragschweißen mittels Lichtbogen und/oder Plasma.

In einem vierten Aspekt betrifft die Erfindung ein Verfahren zur industriellen Bearbeitung, bei dem mit Hilfe eines Gasgemisches ein thermisches Spritzen, Schneiden und/oder eine Oberflächenbehandlung mittels Lichtbogen, Plasma und/oder Laser und/oder ein Fügen und/oder Auftragschweißen mittels Lichtbogen und/oder Plasma vorgenommen wird, **dadurch gekennzeichnet, dass** das Gasgemisch ein Gasgemisch gemäß der Erfindung ist. Fakultativer Sauerstoff wird dem Gasgemisch vor Ort zudosiert.

In einem fünften Aspekt betrifft die Erfindung eine Vorrichtung zum Bereitstellen des oben genannten Gasgemisches, umfassend einen Tank mit flüssigem Argon, Stickstoff, Kohlendioxid, Wasserstoff oder Helium oder deren Mischungen, einen Behälter, der den Kohlenwasserstoff gegebenenfalls in Mischung mit Argon, Stickstoff, Kohlendioxid, Wasserstoff oder Helium oder deren Mischungen enthält, und eine Einrichtung zum Mischen, die über Leitungen mit einer Stelle zur industriellen Bearbeitung mit Hilfe des erfindungsgemäßen Gasgemisches verbunden ist.

Ferner können ein oder mehrere Druckbehälter vorgesehen sein, die Argon, Stickstoff, Kohlendioxid, Wasserstoff oder Helium oder deren Mischungen enthalten. Außerdem können ein oder mehrere Druckbehälter vorgesehen sind, die, gegebenenfalls getrennt, NO, N₂O; und/oder Dotiermengen von Kohlendioxid, Sauerstoff, NO und/oder N₂O in Mischung mit Helium, Argon und/oder Stickstoff; und/oder Sauerstoff unter Normaldruck enthalten.

In einem sechsten Aspekt betrifft die Erfindung ein Verfahren zur Herstellung des oben genannten Gasgemischs, bei dem ein unter Normalbedingungen gasförmiger Kohlenwasserstoff zusammen mit Argon, Stickstoff, Kohlendioxid, Wasserstoff oder Helium oder deren Mischungen und gegebenenfalls Dotiermengen von Sauerstoff, NO und/oder N₂O in einen Druckbehälter abgefüllt wird.

### Beschreibung der Ausführungsformen

Es wurde überraschend gefunden, dass der Zusatz eines unter Normalbedingungen gasförmigen Kohlenwasserstoffs zu üblichen Gasgemischen aus Argon, Helium, Stickstoff und/oder Wasserstoff und gegebenenfalls Beimengung von Kohlendioxid und/oder Dotiermengen von NO und/oder N₂O und/oder Sauerstoff zu einer erheblichen Zunahme des Wirkungsgrades des thermischen Spritzens, Schneidens, Fügens, Auftragschweißens und/oder der Oberflächenbehandlung mittels Lichtbogen, Plasma und/oder mittels Laser führt.

Demgemäß betrifft ein erster Aspekt der Erfindung ein Gasgemisch aus einem Gemisch von Argon, Helium, Stickstoff, Kohlendioxid oder Wasserstoff oder deren Mischungen mit einem unter Normalbedingungen gasförmigen Kohlenwasserstoff. Das erfindungsgemäße Gasgemisch kann ferner Dotiermengen von NO und/oder N₂O und/oder O₂ enthalten.

Bevorzugt weist der Kohlenwasserstoff mindestens eine Doppel- oder Dreifachbindung auf.

Zu den gasförmigen Kohlenwasserstoffen gehören z. B Methan, Ethan, Propan, Cyclopropan, Butan, *iso*-Butan, Cyclobutan und die Kohlenwasserstoffe, die eine Doppel-oder Dreifachbindung aufweisen, z.B. Ethylen (Ethen), Acetylen (Ethin), Propylen (Propen), Propin, 1- und 2-Buten, Isobuten, 1-Butin, 1,2-Butadien und 1,3-Butadien und deren Mischungen.

Ein besonders bevorzugter Kohlenwasserstoff ist Acetylen.

Spezielle Ausführungsformen der Gasgemische sind:
Argon/Acetylen, Helium/Acetylen, Stickstoff/Acetylen, Wasserstoff/Acetylen und Mischungen von zwei, drei oder allen vier der Nicht-Kohlenwasserstoff-Gase mit Acetylen, bevorzugt Argon/Helium/Acetylen.

Die gasförmigen Kohlenwasserstoffe machen im Allgemeinen 0,001 - 30 Vol.-% des erfindungsgemäßen Gasgemisches aus. Bevorzugte Mengen sind 0,01 - 20 Vol.-%, spezieller 1 - 10 Vol.-% und insbesondere 2 - 5 Vol.-%. Die in einem speziellen Fall verwendeten Mengen hängen von der Art des Verfahrens und von den verarbeiteten Werkstoffen ab.

Kohlendioxid, Sauerstoff, Stickstoffmonoxid und Lachgas (N₂O) können in Dotiermengen von 10 vpm bis 10000 vpm (0,001 bis 1,0 Vot.-%), bevorzugt 100 bis 1000 vpm, beigemischt sein.

Kohlendioxid kann auch in Mengen von gewöhnlich 1 bis 80 Vol.-%, bevorzugt 2 bis 50 Vol.-%, besonders bevorzugt 5 bis 20 Vol.-% beigemischt sein.

Ferner kann Sauerstoff auch in Mengen von gewöhnlich 1 bis 30 Vol.-%, bevorzugt 2 bis 20 Vol.-% beigemischt sein. In diesem Fall wird Sauerstoff vor Ort drucklos zugegeben.

Die erfindungsgemäßen Gasgemische können in Druckbehältern vorliegen. Demgemäß ist ein zweiter Aspekt der Erfindung ein unter Druck stehender Behälter, der die oben angegebenen Gasgemische mit Ausnahme von O₂ enthält.

Einen weiteren Aspekt der Erfindung bildet die Verwendung des Gasgemisches beim thermischen Spritzen, Schneiden und/oder bei der Oberflächenbehandlung mittels Lichtbogen, Plasma und/oder Laser und/oder beim Fügen und/oder Auftragschweißen mittels Lichtbogen und/oder Plasma.

Dabei können die Gase als vorgemischtes Gasgemisch (außer Sauerstoff) aus einer oder mehreren Druckflaschen eingesetzt werden oder sie können in einer Mischvorrichtung vor Ort gemischt werden.

Die Aufgabe des Plasmas beim thermischen Spritzen, Schneiden, Fügen, Auftragschweißen und/oder bei der Oberflächenbehandlung mittels Lichtbogen, Plasma und/oder Laser (ein Plasma entsteht auch im Lichtbogen und gewöhnlich auch im Laser) ist es, auf kontrollierte Weise Wärme auf den Werkstoff zu übertragen. Da die Theorie von Plasmen außerordentlich schwierig ist, sind die genauen Vorgänge in den bei den genannten Verfahren erzeugten Plasmen nicht gut bekannt und schwer vorherzusagen.

Ohne durch eine Theorie gebunden zu sein, nimmt man an, dass bei Edelgasplasmen Wärme dadurch erzeugt wird, dass einerseits Elektronen und positiv geladene Ionen zu Atomen rekombinieren und andererseits die Atome Energie durch Stoß abgeben.

Bei Plasmen, an denen H₂- der N₂-Moleküle beteiligt sind, wird angenommen, dass weiter Energie aus der Vereinigung von Atomen zu Molekülen freigesetzt werden kann.

Es wurde überraschend gefunden, dass die erfindungsgemäß eingesetzten Kohlenwasserstoffe insbesondere die Energie der Gasgemische erhöhen.

Wie groß dabei der jeweilige Energieanteil ist, der zur Erwärmung des Werkstoffs führt, hängt von den speziellen Bedingungen des Plasmas ab und ist schwer vorherzusagen. Die Dotierung von Gasgemischen mit geringen Mengen CO₂, NO, N₂O und O₂ insbesondere beim Lichtbogenfügen ist bekannt (siehe z.B. EP 0 544 187 B2, EP 0 639 423 B1 und EP 0 640 431 B1). Durch sie wird u.a. eine Stabilisierung des Lichtbogens, eine bessere Energiekopplung beim Laser und allgemein eine Qualitätsverbesserung bewirkt, was auch bei Vorliegen geringer Mengen der erfindungsgemäß eingesetzten gasförmigen Kohlenwasserstoffe beobachtet wird.

Zum Laserbearbeiten werden beispielsweise CO₂-, Nd-YAG-, Dioden-, Scheiben- oder Faserlaser verwendet.

Die thermischen Spritzverfahren, bei dem die erfindungsgemäßen Gasgemische eingesetzt werden, gliedern sich in Lichtbogenspritzen, Plasmaspritzen und Laserspritzen.

Beim Lichtbogenspritzen werden zwei drahtförmige, elektrisch leitende Spritzwerkstoffe kontinuierlich unter einem bestimmten Winkel aufeinander zugeführt. Zwischen den Spritzdrähten (Elektroden) brennt nach dem Zünden ein Lichtbogen mit einer Temperatur und schmilzt den Spritzwerkstoff ab. Ein starker Gasstrom zerstäubt das Schmelzgut und beschleunigt die Spritzpartikel auf die Werkstückoberfläche hin, wo sie eine Beschichtung bilden. Verfahrensbedingt können nur metallisch leitende, drahtförmige Spritzwerkstoffe verarbeitet werden. Luft kann als Zerstäubergas verwendet werden, aber die Verwendung von Stickstoff und Argon ist üblich.

Im Lichtbogenverfahren aufgetragene Schichten zeichnen sich durch eine sehr gute Haftung aus. Die Spritzpartikel verklammern mit dem Grundwerkstoff. Das Verfahren eignet sich besonders für Anwendungen, die dicke Beschichtungen erfordern oder große Oberflächen betreffen.

Die aufgetragenen Schichten können z.B. zur Isolation, zum Verschleißschutz und zur Gleitlagerung dienen.

Es hat sich nun überraschend herausgestellt, dass die Spritzgeschwindigkeit weiter erhöht werden kann, wenn dem Zerstäubergas gasförmige Kohlenwasserstoffe, insbesondere Acetylen (Ethin), Ethylen (Ethen) oder/und Propylen (Propen) zugesetzt werden, oder die Auftragsrate gesteigert wird, also dickere Schichten abgeschieden werden können. Die Qualität der Beschichtung wird ebenfalls verbessert.

Das Plasmaspritzen ist ein weiteres thermisches Spritzverfahren. Bei diesem Verfahren sind in einem Plasmabrenner eine Anode und bis zu drei Kathoden durch einen schmalen Spalt getrennt. Durch eine Gleichspannung wird ein Lichtbogen zwischen Anode und Kathode erzeugt. Das durch den Plasmabrenner strömende Gas oder Gasgemisch wird durch den Lichtbogen geleitet, hierbei dissoziiert und ionisiert. Die Dissoziation und Ionisation erzeugen ein hochaufgeheiztes, elektrisch leitendes Plasma (Gas aus positiven Ionen und Elektronen). In diesen Plasmastrahl wird durch eine Düse Pulver eingetragen, das durch die hohe Plasmatemperatur angeschmolzen wird. Der Pozessgasstrom (Plasmagasstrom) reißt die Pulverteilchen mit und schleudert sie auf das zu beschichtende Werkstück. Durch die extrem hohe Temperatur (bis 30.000 °C) können nahezu alle Werkstoffe, auch hochschmelzende (z.B. Keramik), verarbeitet werden.

Bei Plasmaspritzschichten kann es sich z.B. um sehr harte, verschleißfeste, nahezu dichte Schichten mit sehr guter chemischer Beständigkeiten handeln.

Das Gasgemisch bei der Plasmabeschichtung kann gleichzeitig als Transportgas und als Schutzgas dienen. Verwendete Gase sind in der Regel Argon, Stickstoff, Wasserstoff oder Helium und deren Gemische.

Es hat sich nun überraschend herausgestellt, dass durch den Zusatz von gasförmigen Kohlenwasserstoffen, insbesondere Acetylen (Ethin), Ethylen (Ethen) oder/und Propylen (Propen) zu dem oder den Gasgemisch(en) die Spritzgeschwindigkeit erhöht werden kann oder die Auftragsrate gesteigert wird, also dickere Schichten abgeschieden werden können. Die Qualität der Beschichtung wird ebenfalls verbessert. Durch die Zugabe von Kohlenwasserstoffen, insbesondere Acetylen, kann bei Beschichtungen auch der Kohlenstoffgehalt positiv beeinflusst werden, was wiederum die Eigenschaften des Schichtwerkstoffes bezüglich mechanischer und tribologischer Hinsicht verbessert.

Das Laserspritzen ist ein weiteres thermisches Spritzverfahren. Beim Laserspritzen wird ein pulverförmig vorliegender Spritzzusatz über eine Düse in den auf das Werkstück fokussierten Laserstrahl eingebracht und mit Hilfe eines Gases auf die Werkstoffoberfläche geschleudert. Im Brennfleck des Lasers entsteht ein Plasma, durch das sowohl das Pulver als auch ein minimaler Teil der Werkstoffoberfläche aufgeschmolzen werden und der zugeführte Spritzzusatz metallurgisch mit dem Werkstoff verbunden wird.

Es hat sich nun überraschend herausgestellt, dass durch den Zusatz von gasförmigen Kohlenwasserstoffen, insbesondere Acetylen (Ethin), Ethylen (Ethen) oder/und Propylen (Propen) zum Gasgemisch wie bei den vorstehenden thermischen Spritzverfahren die Spritzgeschwindigkeit erhöht werden kann oder die Auftragsrate gesteigert wird, also dickere Schichten abgeschieden werden können, und die Qualität der Beschichtung ebenfalls verbessert wird.

Mit thermischem Trennen oder Schneiden sind hier das Plasmaschneiden und das Laserstrahlschneiden gemeint.

Das Plasmaschneiden ist ein Prozess des thermischen Trennens, bei welchem der Grundwerkstoff durch den Plasmalichtbogen geschmolzen und/oder verdampft und teilweise auch verbrannt wird. Als Plasmalichtbogen bezeichnet man einen durch eine gekühlte Düse eingeschnürten ionisierten und dissoziierten Gasstrahl. Durch die Einschnürung erhält man einen Plasmastrahl mit hoher Energiedichte. Das Grundmaterial tritt mit dem Plasmastrahl in Wechselwirkung und wird durch das Plasmagas aus der entstehenden Schnittfuge ausgetrieben. Die zur Einschnürung notwendige Kühlung der Düse erfolgt üblicherweise entweder mittels Wasser und/oder mittels eines Gasgemisches, das als Sekundärgas, Schutzgas oder Hüllgas bezeichnet wird, welches den Plasmastrahl umhüllt. Eine Variante des Plasmaschneidens ist das Feinstrahl-Plasmaschneiden, bei welchem der Plasmastrahl sehr stark eingeschnürt wird. Das schmelzflüssige Material wird durch die hohe kinetische Energie des das Plasma bildenden Gasgemisches (auch als Plasmagas bezeichnet) ausgetrieben. Bei Verwendung eines Gasgemisches, das als Sekundärgas oder Schutzgas dient, bläst auch dieses das flüssige Material aus. Als Gasgemische für die Erzeugung des Plasmas werden Argon, Stickstoff, Wasserstoff und manchmal auch Helium sowie deren Mischungen eingesetzt. Diesem Gasgemisch wird in manchen Fällen auch Sauerstoff zugegeben, wobei der Sauerstoff zu einer Oxidationsreaktion mit dem Werkstoff führen kann und dadurch zusätzliche Energie einbringt. Auch mit Druckluft als Gas wird gearbeitet. Bisweilen wird auch Kohlendioxid zugegeben. Wird ein weiteres Gasgemisch, d.h. ein Sekundärgas verwendet, wird auch für dieses ein Gas oder eine Gasmischung aus den eben genannten Gasen eingesetzt. Die Wahl des Gases beziehungsweise der Gaszusammensetzung wird durch die Verfahrensvariante und vor allem durch Dicke und Art des zu schneidenden Werkstoffes bestimmt.

Es hat sich nun herausgestellt, dass in den Fällen, in denen einem der oben genannten Gasgemische (Plasmagas, Sekundärgas) aus Argon, Helium, Stickstoff oder Wasserstoff oder einer Mischung davon weiter ein gasförmiger Kohlenwasserstoff, insbesondere Acetylen, zugesetzt wird, die Schneidgeschwindigkeit wesentlich erhöht werden kann. Weiter wird die Qualität der Schnittfuge verbessert.

Beim Laserstrahlschneiden wird ein Laserstrahl als Schneidwerkzeug benutzt. Dazu wird der Laserstrahl auf die Bearbeitungsstelle gelenkt. Beim Laserschneiden mit inerten oder reaktionsträgen Gasen als Schneidgasen findet keine oder nahezu keine chemische Reaktion mit dem Grundwerkstoff statt. Das geschmolzene Material wird beim Laserstrahlschneiden mit dem Schneidgas aus der Schnittfuge ausgetrieben. Als Schneidgas wird folglich meist Stickstoff, Argon und/oder Helium verwendet. Auch Druckluft wird eingesetzt. Der Laserstrahl ist ein ideales Werkzeug, um metallische und nichtmetallische Werkstoffe geringer Dicken zu schneiden. Mit zunehmender Werkstoffdicke nimmt die Schneidgeschwindigkeit des Laserstrahls jedoch stark ab.

Überraschend wurde nun gefunden, dass sich ein zugesetzter gasförmiger Kohlenwasserstoff, insbesondere Acetylen, in der Schneidfuge zersetzt und dadurch mehr Energie in die Fuge einbringt. Als Folge wird die Schneidgeschwindigkeit des Laserstrahls bedeutend erhöht. Weiterhin ist es auch möglich, dickere Werkstoffe mit wirtschaftlich zufriedenstellenden Schneidgeschwindigkeiten zu trennen. Die Beschaffenheit der Schnittfuge wird ebenfalls verbessert und auch die Notwendigkeit zur Nachbearbeitung sinkt. Es steigt also die Produktivität.

Schweißen zum stoffsschlüssigen Verbinden von metallischen Werkstücken wird seit langem durchgeführt. Beim Schweißen werden die zu verbindenden Werkstücke aufgeschmolzen. Beim Metall-Schutzgas-Schweißen brennt ein Lichtbogen in einem Schutzgasmantel. Zum Lichtbogen-Schweißen mit abschmelzender Elektrode zählen das Metall-Inertgas-Schweißen (MIG-Schweißen) und das Metall-Aktivgas-Schweißen (MAG-Schweißen) sowie mit nicht abschmelzender Elektrode das Wolfram-Inertgas-Schweißen (WIG-Schweißen). Ferner stellt das Wolfram-Plasma-Schweißen (WP-Schweißen) eine zusätzliche Verfahrensvariante des Lichtbogen-Schweißens unter Schutzgas mit nicht abschmelzender Elektrode dar. Es sind auch Hybridverfahren und Schweißen mit mehreren Elektroden, und insbesondere das Tandemschweißen bekannt. Schutzgasmischungen zum Schweißen mit Lichtbogen existieren in zahlreichen verschiedenen Mischungen, wobei die einzelnen Mischungen für das jeweilige Schweißverfahren und den Werkstoff optimiert sind. Geachtet wird hierbei auf einen stabilen Lichtbogen, eine qualitativ hochwertige Schweißnaht, auf das Vermeiden von Poren und Schweißspritzern und eine hohe Verarbeitungsgeschwindigkeit. Die üblichsten Schutzgase sind Argon, Helium, Stickstoff und Wasserstoff sowie deren Mischungen.

Als Löten wird ein thermisches Verfahren zum stoffschlüssigen Fügen von Werkstoffen bezeichnet, bei dem eine flüssige Phase durch Schmelzen eines Lotes (Lot-Zusatzwerkstoff) entsteht. Beim Löten wird im Gegensatz zum Schweißen die Solidustemperatur der zu verbindenden Werkstücke nicht erreicht. Zu nennen sind hierzu die verschiedenen Lichtbogen-Lot-Verfahren MIG, MAG, WIG sowie das Plasma- und das Plasma-MIG-Löten und hybride Lötverfahren. Bei den Hartlötverfahren, welche mit Lichtbogen und unter Schutzgas arbeiten, wird die Lötverbindung in der Regel unter Einsatz von Schutzgasschweißgeräten hergestellt. Dabei wird jedoch nicht der Grundwerkstoff aufgeschmolzen, sondern nur die sogenannten Hart- bzw. Hochtemperaturlote, welche als Zusatzwerkstoffe verwendet werden. Die eingesetzten Lotwerkstoffe besitzen verhältnismäßig niedrige Schmelzpunkte in der Größenordnung von etwa 1000°C. Als Lotwerkstoffe werden häufig Bronzedrähte eingesetzt, welche aus Kupferbasislegierungen mit unterschiedlichen Legierungselementen wie Aluminium, Silicium oder Zinn bestehen. Die verwendeten Schutzgase sind die gleichen wie beim Lichtbogenschweißen.

Mit Hilfe des Lötens können auch Verbindungen aus unterschiedlichen artverschiedenen Materialien hergestellt werden, wobei auch hier die vorgenannten Vorteile des Lötens gelten. Bei artverschiedenen Werkstoffen ist auch eine Mischform aus Schweißen und Löten möglich, bei welcher das Schmelzbad aus dem Material mit niedrigerem Schmelzpunkt und Lot-Zusatzwerkstoff gebildet wird und das Material mit dem höheren Schmelzpunkt lediglich erwärmt, nicht jedoch geschmolzen wird.

Es wurde nun überraschend gefunden, dass sich die Fügegeschwindigkeit und Qualität der Schweiß- bzw. Lötnaht erheblich verbessern lassen, wenn dem Schutzgas ein gasförmiger Kohlenwasserstoff, insbesondere Acetylen, zugesetzt wird. Ferner wird der Energieeintrag in das Schweißbad/Lotbad durch den Kohlenwasserstoff verbessert.

Beim Plasmafügen (-schweißen und -löten) dient ein Plasmastrahl als Wärmequelle. Der Plasmastrahl wird durch Ionisation und Einschnüren eines Lichtbogens erzeugt. Dieser brennt zwischen einer nichtabschmelzenden negativen (Wolfram-)Elektrode und dem Werkstück als sog. Hauptlichtbogen (direkt übertragener Lichtbogen). Zusätzlich kann für den Zündvorgang zwischen einer nichtabschmelzenden negativen (Wolfram-)Elektrode und einer als Düse ausgebildeten Anode ein Pilotlichtbogen eingesetzt werden. Der für das Schweißen verwendete sogenannte Hauptlichtbogen (Plasmastrahl) kann z.B. entlang eines gewünschten Schweißnahtverlaufs bewegt werden. Durch einen Plasmabrenner werden bis zu drei Gase oder Gasgemische zugeführt, nämlich das sogenannte Plasmagas, gegebenenfalls ein sogenanntes Sekundärgas oder Fokussiergas zum Einschnüren des Plasmastrahls und das sogenannte Schutzgas, das als Schutzgasmantel den Plasmastrahl bzw. Plasmastrahl und Sekundärgas umgibt.

Das Plasma-Stichlochschweißen stellt eine Variante des Plasmaschweißens dar. Das Plasma-Stichlochschweißen wird bei dünneren Blechen eingesetzt. Dieses Verfahren findet hauptsächlich Anwendung im Behälter- und Apparatebau und im Rohrleitungsbau.

Beim Plasma-Stichlochschweißen durchstößt der Plasmastrahl zu Beginn des Schweißvorgangs die gesamte Werkstückdicke. Dabei wird das durch Aufschmelzen des Werkstücks entstehende Schmelzbad vom Plasmastrahl zur Seite gedrückt. Die Oberflächenspannung der Schmelze verhindert ein Durchfallen durch das Stichloch. Stattdessen fließt die Schmelze hinter der sich bildenden Schweißöse wieder zusammen und erstarrt zur Schweißnaht.

Das Mikroplasma-Schweißen wird insbesondere für dünne und dünnste Blechdicken eingesetzt.

Es wurde nun überraschend gefunden, dass der Zusatz eines gasförmigen Kohlenwasserstoffs zu einem oder mehreren der genannten Gasgemische (Plasma- und/oder Sekundär- und/oder Schutzgas) zu einer bemerkenswerten Erhöhung der Schweiß-/Lötgeschwindigkeit wie auch zur Verbesserung der Schweiß-/Lötnaht führt.

Überraschenderweise hat sich auch gezeigt, dass gasförmige Kohlenwasserstoffe und insbesondere Acetylen bereits in kleinen Mengen, die im Bereich von etwa 10 vpm bis etwa 5000 vpm, bevorzugt etwa 100 vpm bis etwa 1000 vpm liegen, die erfinderischen Vorteile zeigen und dass insbesondere beim Lichtbogenfügen, aber auch beim Plasmafügen ein stabilerer Prozess erreicht wird und höhere Fügegeschwindigkeiten möglich werden.

Es gibt kombinierte Lichtbogen-/Laserfügeverfahren, sogenannte Hybridverfahren. Auch hier ist der Zusatz eines gasförmigen Kohlenwasserstoffs, insbesondere von Acetylen, vorteilhaft.

Beim Auftragschweißen wird ein Beschichtungsmaterial auf einen Werkstoff aufgeschweißt.

Zur Oberflächenbehandlung gehört die Oberflächenbehandlung mit Plasma, wie Oberflächenaktivierung, Oberflächenvorbehandlung, Oberflächenbehandlung, Funktionalisieren der Oberfläche und auch die Oberflächenreinigung. Bei dem Plasma kann es sich um ein offenes Plasma wie in einem WIG-Brenner, um ein eingeschnürtes Plasma wie in einem Plasmabrenner oder um ein Plasma in einer Plasmakammer handeln.

Auch in diesen beiden letztgenannten Verfahren wird die Effizienz durch Zusatz eines gasförmigen Kohlenwasserstoffs, insbesondere von Acetylen, stark verbessert.

Die Erfindung betrifft auch ein Verfahren zur industriellen Bearbeitung, bei dem mit Hilfe eines Gasgemisches ein thermisches Spritzen, Schneiden und/oder eine Oberflächenbehandlung mittels Lichtbogen, Plasma und/oder Laser und/oder ein Fügen und/oder Auftragschweißen mittels Lichtbogen und/oder Plasma vorgenommen wird, **dadurch gekennzeichnet, dass** das Gasgemisch ein Gasgemisch gemäß der Erfindung ist. Gegebenenfalls wird dem Gasgemisch eine Dotiermenge Sauerstoff vor Ort zudosiert.

Weiter betrifft die Erfindung eine Vorrichtung zum Bereitstellen des oben genannten Gasgemisches, umfassend einen Tank mit flüssigem Argon, Stickstoff, Kohlendioxid, Wasserstoff oder Helium oder deren Mischungen, einen Behälter, der den Kohlenwasserstoff gegebenenfalls in Mischung mit Argon, Stickstoff, Kohlendioxid, Wasserstoff oder Helium oder deren Mischungen enthält, und eine Einrichtung zum Mischen, die über Leitungen mit einer Stelle zur industriellen Bearbeitung mit Hilfe des erfindungsgemäßen Gasgemisches verbunden ist.

Ferner können ein oder mehrere Druckbehälter vorgehen sind, die Argon, Stickstoff, Kohlendioxid, Wasserstoff oder Helium oder deren Mischungen enthalten. Außerdem können ein oder mehrere Druckbehälter vorgesehen sind, die, gegebenenfalls getrennt, NO, N₂O; und/oder Dotiermengen von Kohlendioxid, Sauerstoff, NO und/oder N₂O in Mischung mit Helium, Argon und/oder Stickstoff; und/oder Sauerstoff unter Normaldruck enthalten.

Die Erfindung betrifft auch ein Verfahren zur Herstellung des oben genannten Gasgemischs, bei dem ein unter Normalbedingungen gasförmiger Kohlenwasserstoff zusammen mit Argon, Stickstoff, Kohlendioxid, Wasserstoff oder Helium oder deren Mischungen und gegebenenfalls Dotiermengen von Sauerstoff, NO und/oder N₂O in einen Druckbehälter abgefüllt wird.

## Patentansprüche

1. Gasgemisch, umfassend ein Gemisch von Argon, Helium, Stickstoff, Kohlendioxid oder Wasserstoff oder deren Mischungen mit einem unter Normalbedingungen gasförmigen Kohlenwasserstoff.

2. Gasgemisch nach Anspruch 1, **dadurch gekennzeichnet, dass** es ferner Dotiermengen von NO und/oder N₂O und/oder Sauerstoff enthält.

3. Gasgemisch nach Anspruch 1 oder 2, **dadurch gekennzeichnet, dass** der Kohlenwasserstoff mindestens eine Doppel- oder Dreifachbindung aufweist und noch bevorzugter Acetylen ist.

4. Gasgemisch nach einem der Ansprüche 1 bis 3, **dadurch gekennzeichnet, dass** es den Kohlenwasserstoff in einem Anteil von 0,001 - 30 Vol.-%, bevorzugt 0,01 - 20 Vol.-%, spezieller 1 - 10 Vol.-% und insbesondere 2 - 5 Vol.-%, bezogen auf das gesamte Gemisch, enthält.

5. Druckbehälter, der das Gasgemisch nach einem der Ansprüche 1 bis 4 enthält.

6. Verwendung des Gasgemisches nach einem der Ansprüche 1 bis 4 beim thermischen Spritzen, Schneiden und/oder bei der Oberflächenbehandlung mittels Lichtbogen, Plasma und/oder Laser.

7. Verwendung des Gasgemisches nach einem der Ansprüche 1 bis 4 beim Fügen und/oder Auftragschweißen mittels Lichtbogen und/oder Plasma.

8. Verfahren zur industriellen Bearbeitung, bei dem mit Hilfe eines Gasgemisches ein thermisches Spritzen, Schneiden und/oder eine Oberflächenbehandlung mittels Lichtbogen, Plasma und/oder Laser vorgenommen wird, **dadurch gekennzeichnet, dass** das Gasgemisch das Gasgemisch nach einem der Ansprüche 1 bis 4 ist.

9. Verfahren zur industriellen Bearbeitung, bei dem mit Hilfe eines Gasgemisches ein Fügen und/oder Auftragschweißen mittels Lichtbogen und/oder Plasma vorgenommen wird, **dadurch gekennzeichnet, dass** das Gasgemisch das Gasgemisch nach einem der Ansprüche 1 bis 4 ist.

10. Verfahren zur industriellen Bearbeitung nach Anspruch 8 oder 9, **dadurch gekennzeichnet, dass** Sauerstoff dem Gasgemisch vor Ort zudosiert wird.

11. Vorrichtung zum Bereitstellen des Gasgemisches nach einem der Ansprüche 1 bis 4, umfassend einen Tank mit flüssigem Argon, Stickstoff, Kohlendioxid, Wasserstoff oder Helium oder deren Mischungen, einen Behälter, der den Kohlenwasserstoff gegebenenfalls in Mischung mit Argon, Stickstoff, Kohlendioxid, Wasserstoff oder Helium oder deren Mischungen enthält, und eine Einrichtung zum Mischen, die über Leitungen mit einer Stelle zur industriellen Bearbeitung mit Hilfe des erfindungsgemäßen Gasgemisches verbunden ist.

12. Vorrichtung nach Anspruch 11, **dadurch gekennzeichnet, dass** ferner ein oder mehrere Druckbehälter vorgehen sind, die Argon, Stickstoff, Kohlendioxid, Wasserstoff oder Helium oder deren Mischungen enthalten.

13. Vorrichtung zum Bereitstellen des Gasgemisches nach Anspruch 11 oder 12, **dadurch gekennzeichnet, dass** ferner ein oder mehrere Druckbehälter vorgesehen sind, die, gegebenenfalls getrennt, NO, N₂O; und/oder Dotiermengen von Kohlendioxid, Sauerstoff, NO und/oder N₂O in Mischung mit Helium, Argon und/oder Stickstoff; und/oder Sauerstoff unter Normaldruck enthalten.

14. Verfahren zur Herstellung eines Gasgemischs nach einem der Ansprüche 1 bis 4, **dadurch gekennzeichnet, dass** ein unter Normalbedingungen gasförmiger Kohlenwasserstoff zusammen mit Argon, Stickstoff, Kohlendioxid, Wasserstoff oder Helium oder deren Mischungen und gegebenenfalls Dotiermengen von NO und/oder N₂O und/oder Sauerstoff in einen Druckbehälter abgefüllt wird.

15. Verfahren nach Anspruch 14, **dadurch gekennzeichnet, dass** der Kohlenwasserstoff Acetylen ist.
